# EUROPÄISCHE PATENTANMELDUNG

(11) **EP 4 815 038 A1**
(43) Veröffentlichungstag der Anmeldung: **30.09.2026**
(21) Anmeldenummer: 25166500.6
(22) Anmeldetag: 26.03.2025
(51) Int. Cl.: H01M 4/04, D21G 1/02

(54) **VERFAHREN ZUM BEHANDELN VON SPANNUNGSFALTEN NACH EINEM KONTINUIERLICHEN BESCHICHTEN**

(71) Anmelder: Cellforce Group GmbH, 72138 Kirchentellinsfurt (DE)
(72) Erfinder: Bold, Benjamin, 72138 Kirchentellinsfurt (DE); Will, Manuel, 72138 Kirchentellinsfurt (DE)
(74) Vertreter: Müller Schupfner & Partner Patent- und Rechtsanwaltspartnerschaft mbB (Muc)

(57) **Zusammenfassung**

Die Erfindung betrifft ein Verfahren zum Behandeln von mindestens einem Ableiterbereich einer mit mindestens einem Material beschichteten Trägerschicht, wobei der mindestens eine Ableiterbereich parallel zum applizierten Material verläuft, wobei der mindestens eine Ableiterbereich durch mindestens ein Walzenpaar zeitgleich mit Druck und Wärme beaufschlagt wird. Des Weiteren betrifft die Erfindung eine Vorrichtung zum Behandeln von mindestens einem Ableiterbereich einer mit mindestens einem Material beschichteten Trägerschicht.

## Beschreibung

Die Erfindung betrifft ein Verfahren zum Behandeln von mindestens einem Ableiterbereich einer mit mindestens einem Material beschichteten Trägerschicht, wobei der mindestens eine Ableiterbereich parallel zum Material verläuft. Des Weiteren betrifft die Erfindung eine Vorrichtung zum Behandeln von mindestens einem Ableiterbereich einer mit mindestens einem Material beschichteten Trägerschicht.

Bei der Herstellung von elektrochemischen Speichern, wie beispielsweise Lithium-Ionen-Batterien, werden regulär Anodenschichten, Kathodenschichten und Separatoren in einander abwechselnder Reihenfolge zusammengelegt. Die Anodenschichten und Kathodenschichten sind sogenannte Elektrodenschichten und weisen eine elektrisch leitfähige Trägerschicht mit einer Beschichtung aus einem sogenannten Aktivmaterial auf. Die Elektrodenschichten werden in einem kontinuierlichen Prozess durch das Beschichten der Trägerschicht mit dem Aktivmaterial hergestellt. Dabei verbleiben die Randbereiche der Trägerschicht ohne eine Beschichtung und dienen später als Ableiter zur elektrischen Kontaktierung der Elektrodenschichten in einer Batteriezelle.

Die kontinuierliche Applikation des Aktivmaterials in Form einer trockenen oder nassen Beschichtung durch Kalanderwalzen erfordert hohe Drücke. Hierdurch resultieren lokale Oberflächenvergrößerungen der Trägerschicht im Bereich der Beschichtung und eine Wellenbildung in den unbeschichteten Bereichen bzw. den Ableiterbereichen der Trägerschicht. Durch die resultierenden Wellen in den Ableiterbereichen kann ein anschließendes Falten oder Ablängen der Elektrodenschichten nicht präzise erfolgen.

Die vorliegende Erfindung hat daher die Aufgabe, ein Verfahren zum Korrigieren einer Wellenbildung in Ableiterbereichen als Folge von Beschichtungsvorgängen bereitzustellen. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird ein Verfahren zum Behandeln von mindestens einem Ableiterbereich einer mit mindestens einem Material beschichteten Trägerschicht bereitgestellt. Der mindestens eine Ableiterbereich der Trägerschicht verläuft parallel zum Aktivmaterial entlang einer Förderrichtung, bei der die Trägerschicht eine längste Ausdehnung aufweisen kann. Insbesondere kann die Trägerschicht mit dem applizierten Material als Grundlage für eine Herstellung von Elektrodenschichten oder Elektrodenfolien dienen. Das Material kann somit als ein Aktivmaterial ausgebildet sein. Beispielsweise kann aufgrund eines kontinuierlichen Herstellungsprozesses die Trägerschicht als ein elektrisch leitfähiges Band ausgebildet sein, welches in Förderrichtung des Herstellungsprozesses eine größere Länge aufweist als quer zur Förderrichtung. Ein Ableiterbereich kann einseitig oder beidseitig eines Bereichs mit einem auf die Trägerschicht applizierten Aktivmaterials angeordnet sein.

Das Verfahren ist nicht auf die Herstellung von Elektroden für Batteriezellen oder elektrochemische Energiespeicher beschränkt. Vielmehr kann das mindestens eine Material grundsätzlich eine beliebige Beschichtung unter Druckaufbringung, beispielsweise durch Kalandrieren, sein, die auf einer elektrisch leitfähigen oder nicht leitfähigen Trägerschicht aufgetragen ist.

Erfindungsgemäß wird der mindestens eine Ableiterbereich durch mindestens ein Walzenpaar zeitgleich mit Druck und Wärme beaufschlagt.

Die mit dem Aktivmaterial beschichtete Trägerschicht kann nach entsprechendem Ablängen bereits als eine Elektrodenfolie eingesetzt werden. Je nach Ausgestaltung können weitere Beschichtungsprozesse und/oder Behandlungsvorgänge durchgeführt werden. Die Trägerschicht kann beispielsweise als eine Aluminiumfolie, eine Kupferfolie und dergleichen ausgeführt sein.

Gemäß einem weiteren Aspekt der Erfindung wird eine Vorrichtung zum Behandeln von mindestens einem Ableiterbereich einer mit mindestens einem, beispielsweise als Aktivmaterial ausgebildeten, Material beschichteten Trägerschicht bereitgestellt. Die Vorrichtung kann als eine Herstellungsvorrichtung zum Herstellen von Elektroden für einen elektrischen Energiespeicher oder als ein Teil einer derartigen Herstellungsvorrichtung ausgeführt sein.

Mindestens ein Walzenpaar der Vorrichtung ist dazu eingerichtet, den mindestens einen Ableiterbereich in einem kontinuierlichen Prozess gleichzeitig mit Druck und Temperatur zu beaufschlagen.

Durch die gleichzeitige Beaufschlagung des Ableiterbereichs mit Druck und Temperatur, wie beispielsweise Heißpressen, kann ein sogenannter Bügeleisen-Effekt bzw. ein Wärme- und Druckprozess erzeugt werden, welcher die entstandenen Falten oder Wellen im Ableiterbereich dauerhaft beseitigen kann.

Bei einem Ausführungsbeispiel wird der mindestens eine Ableiterbereich entlang einer Förderrichtung durch das mindestens eine Walzenpaar geführt. Hierdurch kann der Ableiterbereich parallel zum mit Aktivmaterial beschichteten Abschnitt der Trägerschicht behandelt werden. Die Walzen des mindestens einen Walzenpaars sind entlang der Förderrichtung in einer Flucht oder entlang der Förderrichtung zueinander versetzt angeordnet. Hierdurch kann die Erwärmung und die Richtung der Druckbeaufschlagung präzise gesteuert werden.

Der Ableiterbereich kann technisch besonders einfach zeitgleich zu der Druckbeaufschlagung mit Temperatur beaufschlagt werden, wenn mindestens eine Walze des mindestens einen Walzenpaars direkt beheizt wird.

Nach einer weiteren Ausführungsform wird der mindestens eine Ableiterbereich entlang der Förderrichtung durch mindestens zwei einander entlang der Förderrichtung versetzte Walzenpaare geführt. Hierdurch kann das Verfahren in mehreren Schritten durchgeführt werden.

Der Ableiterbereich wird durch mindestens eine Walze des ersten Walzenpaars mit einer ersten Temperatur und durch mindestens eine Walze des zweiten Walzenpaars mit einer zweiten Temperatur beaufschlagt. Die Behandlung des mindestens einen Ableiterbereichs kann durch diese Maßnahme beispielsweise in mehreren kleineren Schritten erfolgen. Hierdurch kann die Einwirkung von größeren Temperatursprüngen auf den Ableiterbereich und das benachbarte Aktivmaterial vermieden werden, sodass
eine besonders optimale Verbesserung der Schäden in kleinen Schritten geschehen kann.

Eine mehrmalige Behandlung des Ableiterbereichs kann realisiert werden, wenn der mindestens eine Ableiterbereich mit der ersten Temperatur beaufschlagt wird, welche der zweiten Temperatur gleicht. Hierdurch können eingebrachte Verformungen oder Falten im Ableiterbereich durch mehrmaliges Einsetzen eines Wärme- und Druckprozesses besonders effektiv beseitigt werden.

Gemäß einem weiteren Ausführungsbeispiel wird der mindestens eine Ableiterbereich mit der ersten Temperatur beaufschlagt, welche die zweite Temperatur übersteigt. Diese Maßnahme ermöglicht eine schrittweise und kontrollierte Abkühlung des Ableiterbereichs nach dem Passieren des ersten Walzenpaars.

Nach einer weiteren Ausführungsform wird der mindestens eine Ableiterbereich durch das Beaufschlagen mit der zweiten Temperatur gekühlt. Hierdurch kann die Abkühlung des Ableiterbereichs nach der Behandlung mittels des Wärme- und Druckprozesses gegenüber einer natürlichen Abkühlung beschleunigt werden.

Zusätzlich zu der Erwärmung der mindestens einen Walze kann ein Wärmeeintrag aufgrund von Reibung erzielt werden, wenn die Walzen des mindestens einen Walzenpaars in gegensätzliche Richtungen oder in gleiche Richtungen gedreht werden.

Gemäß einem weiteren Ausführungsbeispiel wird die mindestens eine Walze des ersten Walzenpaars durch Strahlungswärme und/oder durch Induktion und/oder durch Wärmeleitung auf die erste Temperatur erwärmt. Die mindestens eine Walze des zweiten Walzenpaars wird durch Wärmeleitung und/oder durch Konvektion auf die zweite Temperatur abgekühlt.

Je nach Ausgestaltung kann die mindestens eine Walze des zweiten Walzenpaars auch durch Strahlungswärme und/oder durch Induktion und/oder durch Wärmeleitung auf eine zweite Temperatur erwärmt werden, welche unterhalb der ersten Temperatur liegen oder die erste Temperatur übersteigen kann. Hierdurch kann die Erwärmung und/oder Abkühlung der Walzen besonders vielseitig erfolgen.

Nachstehend werden mehrere Ausführungsbeispiele der Erfindung anhand der Zeichnungen näher erläutert. Es zeigen:
Fig. 1 eine schematische Darstellung einer Vorrichtung zum Behandeln von mindestens einem Ableiterbereich gemäß einer ersten Ausführungsform der Erfindung,
Fig. 2 eine schematische Darstellung einer Vorrichtung zum Behandeln von mindestens einem Ableiterbereich gemäß einer zweiten Ausführungsform der Erfindung,
Fig. 3 eine schematische Darstellung einer Vorrichtung zum Behandeln von mindestens einem Ableiterbereich gemäß einer dritten Ausführungsform der Erfindung, und
Fig. 4 ein schematisches Diagramm zum Veranschaulichen eines Verfahrens zum Behandeln von mindestens einem Ableiterbereich einer mit mindestens einem Aktivmaterial beschichteten Elektrodenfolie gemäß einer Ausführungsform der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

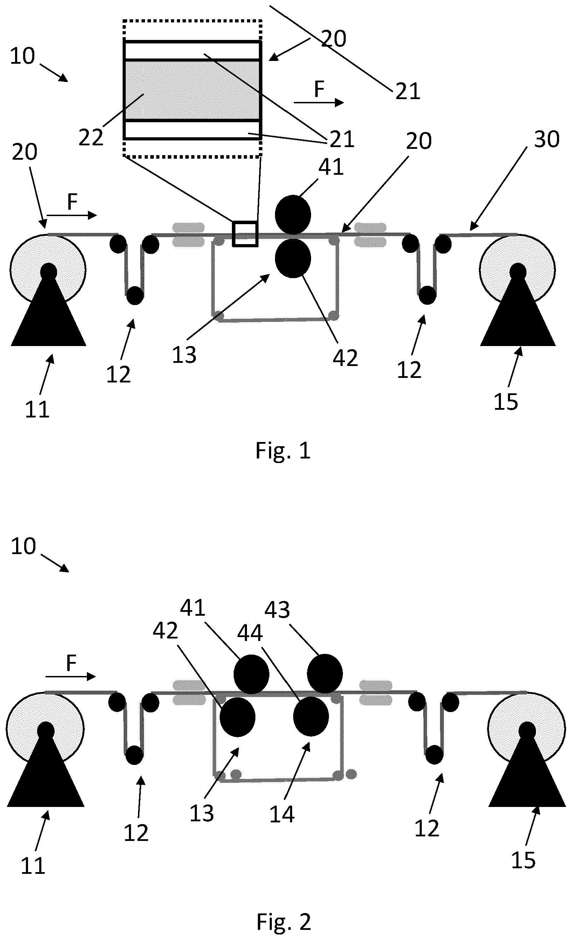

Die Fig. 1 zeigt eine schematische Darstellung einer Vorrichtung 10 zum Behandeln von mindestens einem Ableiterbereich 21 einer Trägerschicht 20 gemäß einer ersten Ausführungsform der Erfindung.

Die Trägerschicht 20 ist als eine bandförmige Metallfolie ausgebildet und ist beispielhaft mit einem als Aktivmaterial ausgebildeten Material 22 beschichtet. Die Beschichtung mit dem Aktivmaterial 22 ist zentriert zwischen zwei randseitigen Ableiterbereichen 21 umgesetzt.

Die Trägerschicht 20 ist im dargestellten Ausführungsbeispiel aus Kupfer hergestellt. Die beiden Ableiterbereiche 21 sind unbeschichtet und fungieren als Stromableiter bzw. Stromverbinder. Ein Ausschnitt der mit dem Aktivmaterial 22 beschichteten Trägerschicht 20 ist schematisch in Fig. 1 visualisiert.

Die Vorrichtung 10 ist im dargestellten Ausführungsbeispiel als eine Herstellungsvorrichtung zum Herstellen von Elektroden 30 für einen elektrischen Energiespeicher (nicht dargestellt) ausgeführt. Die Vorrichtung 10 weist eine erste Trägerrolle 11, auf welcher die Trägerschicht 20 in bereits beschichteter Form aufgewickelt ist. Nach einem Passieren einer Bahnspannungskontrolle 12 wird die Trägerschicht 20 einem ersten Walzenpaar 13 zugeführt.

Das erste Walzenpaar 13 der Vorrichtung 10 ist dazu eingerichtet, den mindestens einen Ableiterbereich 21 in einem kontinuierlichen Prozess gleichzeitig mit Druck und Temperatur zu beaufschlagen. Hierfür üben zwei erste Walzen 41, 42 Druck auf die Ableiterbereiche 21 aus. Der Druck ist entgegen der Förderrichtung F auf die Ableiterbereiche 21 gerichtet. Die Walzen 41, 42 des ersten Walzenpaars 13 sind entlang der Förderrichtung F in einer Flucht zueinander angeordnet.

Die beiden Walzen 41, 42 des ersten Walzenpaars 13 sind darüber hinaus erwärmt und können hierdurch eine zeitgleiche Beaufschlagung der Ableiterbereiche 21 mit einer Temperatur ermöglichen. Durch das erste Walzenpaar 13 werden die Ableiterbereiche 21 zusätzlich zum Druck auch erhitzt.

Im dargestellten Ausführungsbeispiel ist für jeden Ableiterbereich 21 ein Walzenpaar 13 vorgesehen. Die beiden ersten Walzenpaare 13 können durch gemeinsame Antriebswellen miteinander verbunden sein. Alternativ kann ein Walzenpaar 13 beide Ableiterbereiche 21 mit Druck und Temperatur beaufschlagen können, bei dem ein mittiger Abschnitt ausgespart ist, um das Aktivmaterial 22 der Trägerschicht 20 nicht zu kontaktieren.

Nach dem Beaufschlagen der Ableiterbereiche 21 mit Druck und Temperatur kann die Trägerschicht 20 beispielsweise als eine Elektrode 30 eingesetzt werden. Hierfür wird die bandförmige Elektrode 30 nach einer weiteren Bahnspannungskontrolle 12 auf einer zweiten Trägerrolle 15 aufgewickelt.

In Fig. 2 ist eine schematische Darstellung einer Vorrichtung 10 zum Behandeln von mindestens einem Ableiterbereich 21 gemäß einer zweiten Ausführungsform der Erfindung gezeigt. Im Unterschied zum in Fig. 1 gezeigten Ausführungsbeispiel wird ein zweites Walzenpaar 14 eingesetzt.

Die zweiten Walzen 43, 44 bzw. die Walzen 43, 44 des zweiten Walzenpaars 14 können derart thermische konditioniert werden, dass die Ableiterbereiche 21 nach dem Passieren des ersten Walzenpaars 13 erneut erhitzt und verpresst oder abgekühlt werden.

Weiterhin sind die ersten Walzen 41, 42 des ersten Walzenpaars 13 und die zweiten Walzen 43, 44 des zweiten Walzenpaars 14 entlang der Förderrichtung F zueinander versetzt angeordnet.

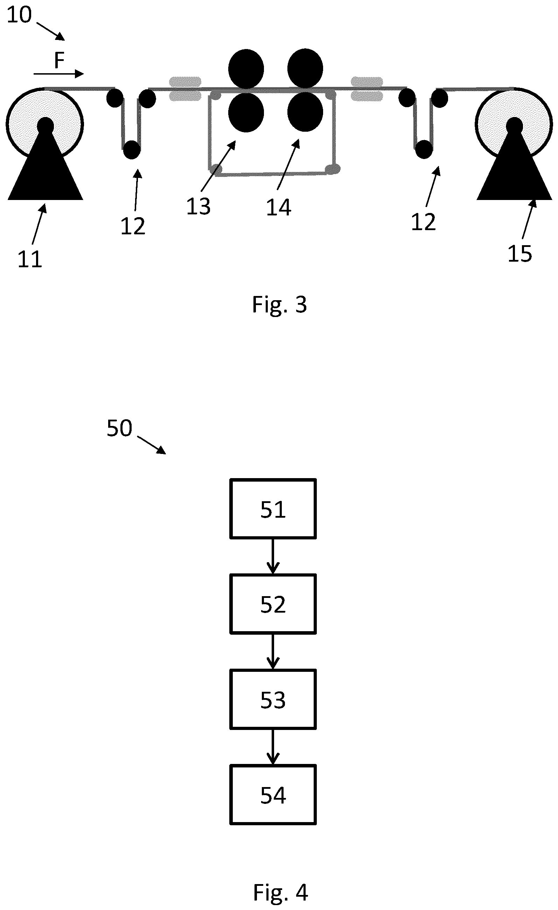

Fig. 3 zeigt eine schematische Darstellung einer Vorrichtung 10 zum Behandeln von mindestens einem Ableiterbereich 21 gemäß einer dritten Ausführungsform der Erfindung. Im Unterschied zum in Fig. 2 gezeigten Ausführungsbeispiel sind die ersten Walzen 41, 42 des ersten Walzenpaars 13 und die zweiten Walzen 43, 44 des zweiten Walzenpaars 14 entlang der Förderrichtung F fluchtend angeordnet, sodass die auf die Ableiterbereiche 21 resultierende Druckkraft ausschließlich vertikal ausgeübt wird.

In Fig. 4 ist ein schematisches Diagramm zum Veranschaulichen eines Verfahrens 50 zum Behandeln von mindestens einem Ableiterbereich 21 einer mit mindestens einem Aktivmaterial 22 beschichteten Trägerschicht 20 gemäß einer Ausführungsform der Erfindung gezeigt.

Der mindestens eine Ableiterbereich 21 der Trägerschicht 20 verläuft parallel zum Aktivmaterial 22 entlang der Förderrichtung F, bei der die Trägerschicht 20 eine längste Ausdehnung aufweist.

Insbesondere kann die Trägerschicht 20 mit dem applizierten Aktivmaterial 22 als Grundlage für eine Herstellung von Elektrodenschichten oder Elektrodenfolien 30 dienen. Beispielsweise kann aufgrund eines kontinuierlichen Herstellungsprozesses die Trägerschicht 20 als ein elektrisch leitfähiges Band ausgebildet sein, welches in Förderrichtung F des Herstellungsprozesses eine größere Länge aufweist als quer zur Förderrichtung F.

In einem ersten Schritt 51 des Verfahrens 50 wird eine Trägerschicht 20 bereitgestellt. Anschließend kann die Trägerschicht 20 mit einem oder mehreren Aktivmaterialien beschichtet 52 werden. Die Ableiterbereiche 21 beidseitig des Aktivmaterials 22 bleiben unverändert.

Aufgrund der Beschichtung der Trägerschicht 20 mit dem Aktivmaterial 22 können Falten oder Wellen in den Ableiterbereichen 21 entstehen. In einem weiteren Schritt 53 werden diese unerwünschten Verformungen randseitig des Aktivmaterials 22 geglättet. Hierfür wird mindestens ein Walzenpaar 13 verwendet, um die Ableiterbereiche 21 mit Druck und Wärme zu beaufschlagen.

In einem weiteren Schritt 54 wird die randseitig behandelte Trägerschicht 20 als Elektrode 30 verwendet oder zumindest auf eine Trägerrolle 15 aufgewickelt.

## Patentansprüche

1. Verfahren (50) zum Behandeln von mindestens einem Ableiterbereich (21) einer mit mindestens einem Material (22) beschichteten Trägerschicht (20), wobei der mindestens eine Ableiterbereich (21) parallel zum applizierten Material (22) verläuft, wobei der mindestens eine Ableiterbereich (21) durch mindestens ein Walzenpaar (13) zeitgleich mit Druck und Wärme beaufschlagt wird.

2. Verfahren nach Anspruch 1, wobei der mindestens eine Ableiterbereich (21) entlang einer Förderrichtung (F) durch das mindestens eine Walzenpaar (13) geführt wird, wobei die Walzen (41, 42) des mindestens einen Walzenpaars (13) entlang der Förderrichtung (F) in einer Flucht oder entlang der Förderrichtung (F) zueinander versetzt angeordnet sind.

3. Verfahren nach Anspruch 1 oder 2, wobei mindestens eine Walze (41, 42) des mindestens einen Walzenpaars (13) direkt oder indirekt beheizt wird.

4. Verfahren nach einem der Ansprüche 1 bis 3, wobei der mindestens eine Ableiterbereich (21) entlang der Förderrichtung (F) durch mindestens zwei einander entlang der Förderrichtung (F) versetzte Walzenpaare (13, 14) geführt wird, wobei der Ableiterbereich (21) durch mindestens eine Walze (41, 42) des ersten Walzenpaars (13) mit einer ersten Temperatur und durch mindestens eine Walze (43, 44) des zweiten Walzenpaars (14) mit einer zweiten Temperatur beaufschlagt wird.

5. Verfahren nach Anspruch 4, wobei der mindestens eine Ableiterbereich (21) mit der ersten Temperatur beaufschlagt wird, welche der zweiten Temperatur gleicht.

6. Verfahren nach Anspruch 4, wobei der mindestens eine Ableiterbereich (21) mit der ersten Temperatur beaufschlagt wird, welche die zweite Temperatur übersteigt.

7. Verfahren nach Anspruch 6, wobei der mindestens eine Ableiterbereich (21) durch das Beaufschlagen mit der zweiten Temperatur gekühlt wird.

8. Verfahren nach einem der Ansprüche 1 bis 7, wobei die Walzen (41, 42) des mindestens einen Walzenpaars (13, 14) in gegensätzliche Richtungen oder in gleiche Richtungen gedreht werden.

9. Verfahren nach einem der Ansprüche 5 bis 8, wobei die mindestens eine Walze (41, 42) des ersten Walzenpaars (13) durch Strahlungswärme, durch Induktion und/oder durch Wärmeleitung auf die erste Temperatur erwärmt wird, und/oder wobei die mindestens eine Walze (43, 44) des zweiten Walzenpaars (14) durch Wärmeleitung und/oder durch Konvektion auf die zweite Temperatur abgekühlt wird.

10. Vorrichtung (10) zum Behandeln von mindestens einem Ableiterbereich (21) einer mit mindestens einem Material (22) beschichteten Trägerschicht (20), aufweisend mindestens ein Walzenpaar (13, 14), welches dazu eingerichtet ist, den mindestens einen Ableiterbereich (21) in einem kontinuierlichen Prozess gleichzeitig mit Druck und Temperatur zu beaufschlagen.
